# EUROPEAN PATENT APPLICATION

(11) **EP 2 623 672 A2**
(43) Date of publication of application: **07.08.2013**
(21) Application number: 13161940.5
(22) Date of filing: 14.06.2005
(51) Int. Cl.: E01C 13/08

(54) **Artificial turf provided with a granular infill comprising additives, as well as such an infill**

(30) Priority: 17.06.2004 NL 1026444
(62) Divisional of application: 05752910.9
(71) Applicant: Ten Cate Thiolon B.V., 7443 RE Nijverdal (NL)
(72) Inventor: Smit, Gerardus Hubertus, 7535 DA ENSCHEDE (NL); Slootweg, Geurt Bastiaan, 7534 HW ENSCHEDE (NL); Van der Gaag, Frederik Jan, 7443 KC NIJVERDAL (NL); Olde Weghuis, Marinus Hendrikus, 7574 AB OLDENZAAL (NL); Op den Buijsch, Francois Antoine Marie, 6367 HN VOERENDAAL (NL); Bruls, Wilhelmus Gerardus Marie, 6243 BE GEULLE (NL); Widdershoven, Christian Antoine Marie Jean-Pierre, 6102 GB ECHT (NL); Welzen, Leonardus Jacobus Johannus Wilhelmus, 6129 JC URMOND (NL)
(74) Representative: Algemeen Octrooi- en Merkenbureau

(57) **Abstract**

The invention relates to an artificial turf suitable for sports fields consisting at least of a substrate to which first artificial grass fibres are attached and of a granular infill, which is provided between said first artificial glass fibres and which is made of a recyclable synthetic material.

According to the invention, the artificial turf is characterized in that one or more additives have been added to the granular synthetic infill for improving the playing characteristics of the artificial turf.

The invention furthermore relates to such a granular infill for use in an artificial turf suitable for sports fields.

## Description

The invention relates to an artificial turf suitable for sports fields consisting at least of a substrate to which first artificial grass fibres are attached and of a granular infill, which is provided between said first artificial glass fibres and which is made of a recyclable synthetic material.

The invention furthermore relates to a granular infill for use in an artificial turf suitable for sports fields.

An artificial grass sports field as referred to in the introduction is known, for example from EP 1 158 099.

Many sports, such as field hockey, tennis, American football etc etc are now played on artificial grass sports fields, which fields are made up of an artificial turf as referred to in the introduction. Although sporters sustain fewer injuries on the natural grass sports field when falling or making a sliding tackle, on account of the softer surface thereof, such sports fields are often severely damaged when the above sports are played thereon, precisely because they are used intensively and because of the varying influence of the weather conditions.

Artificial grass sports fields, on the other hand, require less maintenance and can be played on much more intensively than the natural grass sports fields. To give the artificial grass sports fields playing characteristics that resemble those of natural grass as much as possible, a granular material such as sand or grains of a synthetic material is spread between the artificial grass fibres. These infilled grains not only provide a softer, shock-absorbing playing surface on which players are less prone to injury, but they also provide improved playing characteristics.

The use of an infill in artificial grass sports fields has a number of drawbacks. Not only is the construction of such a artificial grass sports field more labour-intensive than the construction of a natural grass sports field, but an artificial grass sports field provided with an infill requires subsequent maintenance as well. The initially uniform distribution of the granular infill can be disturbed by intensive usage. As a result, areas containing hardly any infill may form in particular in places where the field is played on very intensively, for example in the goal area, which has an adverse effect on the quality of play, but which above all leads to an increased risk of injury. The distribution and the amount of the granular material of an artificial grass sports field provided with an infill must be verified at regular intervals and repairs must be carried out, if necessary.

Furthermore it has become apparent that the weather influences affect the properties of the infill with the passage of time, which has a negative effect on the quality of the infill and thus on the playing characteristics of the artificial grass sports field. A negative factor, for example, is the strong compaction of the infill, as a result of which the artificial grass sports field will feel increasingly hard during play, with an increased risk of injury. Furthermore, the synthetic infill may change (harden or become brittle) under the influence of the weather conditions (sunlight, for example).

Generally, the currently known artificial grass sports fields that make use of a granular infill are characterized by playing characteristics that deteriorate with the passage of time.

The object of the invention is to provide an artificial glass sports fields that does not exhibit the above drawbacks. According to the invention, the artificial turf is **characterized in that** one or more additives have been added to the granular synthetic infill for improving the playing characteristics of the artificial turf.

In a specific embodiment, said additive is a flame retardant, in particular aluminium trihydrate (ATH).

In another functional embodiment of the artificial grass sports field or of the granular infill, the additive is according to the invention an antistatic additive. As a result, any static electricity generated during play can discharge. Usually, the known infill that is present between the fibres, which is used in many artificial grass sports fields, is statically charged during play, causing it to migrate upwards in the field. Thus, the granular infill can be spread through the air, which is less pleasant during play. The use of an antistatic additive eliminates these drawbacks.

The antistatic additive furthermore ensures that no static discharges will take place via the players.

More specifically, the antistatic additive may be a polymer, especially a permanent antistatic, such as a polyamide or a polyether block amide. In another embodiment, the additive is a polyester block copolymer. In another embodiment, the additive is a polyester block copolymer, a glycerol ester, a synthetic amine or an alkyl sulphonate.

In another functional embodiment, the additive is a hydrophilic additive. The artificial grass sports field thus obtained has this function-specific characteristic that it is capable of absorbing moisture (water) via the granular infill. As a result, the artificial grass sports field in question will remain moist longer, which has a positive effect on the way the players play (making sliding tackles, etc). When the field is played on, the absorbed moisture is released again, the same as with natural grass.

An example of a hydrophilic additive that can be added to the infill is ethylene vinyl alcohol copolymer. This polymer is capable of absorbing much water, depending on the quantity of vinyl alcohol in the copolymer. Another example of a hydrophilic additive is polyhydroxyethyl methacrylate. In another functional embodiment, the additive may furthermore be an oil-containing additive, in particular paraffin oil. In this way an artificial grass sports field is obtained which - provided with such an infill - offers less resistance upon interaction with play attributes and/or players, which on the one hand leads to improved playing characteristics and which on the other hand strongly decreases the risk of injury.

Furthermore, the additive may be an algicide. The use of such an additive not only prolongs the life of the artificial grass sports field, but it also leads to improved playing characteristics, since the quality of the artificial grass sports field can be guaranteed longer and, in addition, is more or less uniform over the entire field.

In a specific embodiment according to the invention, the granular infill is provided in a density of 0.3-1.5 kg/dm³. The density of the material ranges from 0.8 to 1.49 kg/dm³, for example, or from 1.61 to 2.5 kg/dm³, whilst furthermore the granular infill has a diameter of less than 1.5 mm.

The invention will now be explained in more detail with reference to a drawing, in which:

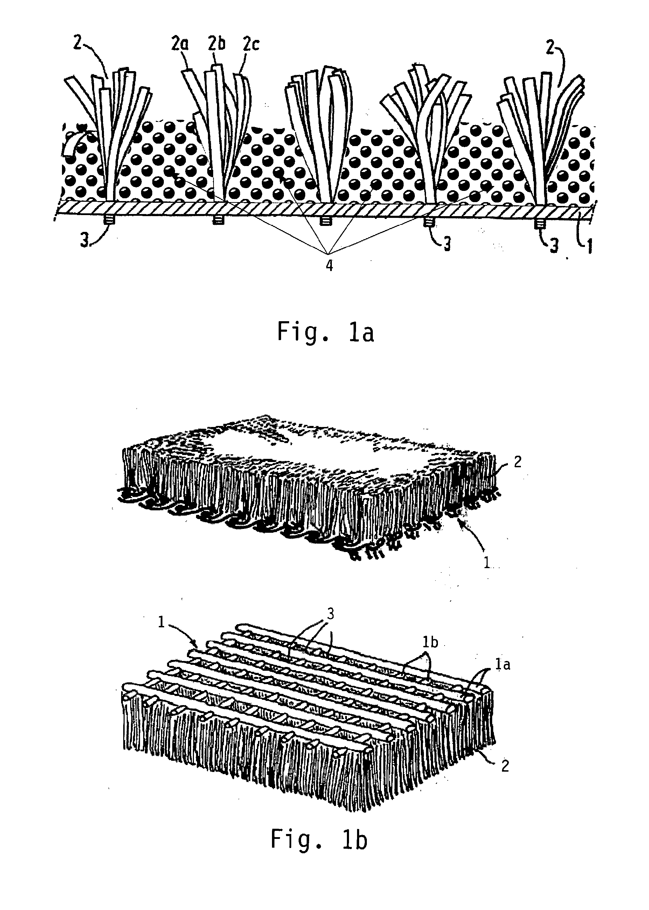

Figures 1a and 1b schematically show a few embodiments of an artificial grass sports field provided with a granular infill according to the invention.

Figures 1a and 1b show a few embodiments of an artificial grass sports field in which a granular infill according to the invention can be used. In both figures, the artificial grass sports field comprises a substrate 1, to which several synthetic fibres 2 have been attached at the locations indicated by reference numeral 3, for example by tufting. The synthetic fibre may comprise any combination of materials and may be made of any synthetic material or mixture of synthetic materials. The synthetic fibre may be individually attached to the substrate or as a bundle of, for example intertwined fibres 2a-2c. More in particular, the fibre that is used may be a fibrillated band fibre.

A granular infill 4 is provided between the synthetic fibres 2, which infill 4 is shown on a strongly enlarged scale (merely for illustrative purposes) in the form of spheres. Although such an artificial grass sports field provided with a granular infill 4 is known per se and is used in all kinds of different embodiments, additives that improve the playing characteristics of the artificial grass sports field have according to the invention been added to the granular infill 4.

In specific embodiments, one of said additives may be a flame retardant, in particular aluminium trihydrate (ATH). On the other hand, in a functional embodiment the additive may be an antistatic additive which is added to the granular infill during the production thereof.

Usually, the granular infill is a made of a synthetic material, for example a polyolefin-based material or vinyl polymer-based materials, which are also recyclable. The use of an antistatic additive in the granular infill achieves that any static electricity generated during play can discharge. This prevents the granular infill from being statically charged during play, causing it to migrate upwards in the artificial grass sports field due to repulsion. This prevents the granular infill being spread through the air during play. Furthermore, the antistatic additive ensures that any static charge that may be generated will be discharged via the artificial grass sports field rather than via the players.

The antistatic additive may be a polymer, in particular a permanent antistatic agent, such as a polyamide or a polyester block amide. In another embodiment, on the other hand, the antistatic additive may be a polyester block copolymer, a glycerol ester, a synthetic amine or an alkyl sulphonate.

The additive that is added to the granular infill may be a hydrophilic additive, for example ethylene vinyl alcohol copolymer. This polymer is capable of absorbing much water, depending on the quantity of vinyl alcohol in the copolymer. Another example of a hydrophilic additive is polyhydroxyethyl methacrylate.

The artificial grass sports field thus obtained has this function-specific characteristic that it is capable of absorbing moisture (water) via the granular infill. As a result, the artificial grass sports field in question will remain moist longer, which has a positive effect on the way the players play (making sliding tackles, etc). When the field is played on, the absorbed moisture is released again, the same as with natural grass.

On the other hand, the additive may be an oil-containing additive, in particular a paraffin oil. The artificial grass sports field - thus obtained - offers less resistance upon interaction between the players and the field, which on the one hand leads to improved playing characteristics and which on the other hand strongly decreases the risk of injuries (for example when making a sliding tackle on the field).

Furthermore, an algicide may be used as the additive. This not only prolongs the life of the artificial grass sports field to a significant extent, since the field will no longer be affected by algal growth as a result of, for example, the weather conditions. Furthermore, the quality of the artificial grass sports field can be guaranteed longer, and a more or less uniform quality is obtained over the entire field.

In a specific embodiment the granular infill is provided in a density of 0.3-1.5 kg/dm³. The density of the material ranges from 0.8 to 1.49 kg/dm³, for example, or from 1.61 to 2.5 kg/dm³, whilst furthermore the granular infill 4 may have a diameter of less than 1.5 mm.

In another embodiment, as shown in figure 1b, the synthetic fibre may be a monofilament. Also in this case, several monofilaments may be twined to form a bundle, after which each bundle is attached to the substrate 1. In figure 1b, the substrate has an open structure and is composed of a grid of supporting yarns 1a-1b, to which the synthetic fibres 2 are attached.

## Claims

1. An artificial turf suitable for sports fields consisting at least of a substrate to which first artificial grass fibres are attached and of a granular infill, which is provided between said first artificial glass fibres and which is made of a recyclable synthetic material, **characterized in that** one or more additives have been added to the granular synthetic infill for improving the playing characteristics of the artificial turf.

2. An artificial turf according to claim 1, **characterized in that** said additive is a flame retardant, in particular aluminium trihydrate (ATH).

3. An artificial turf according to claim 1 or 2, **characterized in that** the additive is an antistatic additive.

4. An artificial turf according to claim 3, **characterized in that** the antistatic additive is a polymer, in particular a polyamide or a polyether block amide.

5. An artificial turf according to claim 3, **characterized in that** the additive is a polyester block copolymer, a glycerol ester, a synthetic amine or an alkyl sulphonate.

6. An artificial turf according to any one or more of the preceding claims, **characterized in that** the additive is a hydrophilic additive.

7. An artificial turf according to claim 6, **characterized in that** the hydrophilic additive is ethylene vinyl alcohol copolymer.

8. An artificial turf according to claim 6, **characterized in that** the hydrophilic additive is a polyhydroxyethyl methacrylate.

9. An artificial turf according to any one or more of the preceding claims, **characterized in that** the additive is an oil-containing additive, in particular paraffin oil.

10. An artificial turf according to any one or more of the preceding claims, **characterized in that** the additive is an algicide.

11. An artificial turf according to any one or more of the preceding claims, **characterized in that** the granular infill is provided in a density of 0.3-1.5 kg/dm³.

12. An artificial turf according to any one or more of the preceding claims, **characterized in that** the granular infill has a density ranging from 0.8 to 1.49 kg/dm³, or from 1.61 to 2.5 kg/dm³.

13. An artificial turf according to any one or more of the preceding claims, **characterized in that** the granular infill has a diameter of less than 1.5 mm.

14. A granular infill for use in artificial turf suitable for sports fields and as defined in any one or more of the preceding claims.
